# EUROPÄISCHE PATENTSCHRIFT

(11) **EP 0 949 029 B1**
(45) Veröffentlichungstag und Bekanntmachung des Hinweises auf die Patenterteilung: **07.11.2001**
(21) Anmeldenummer: 98104210.4
(22) Anmeldetag: 10.03.1998
(51) Int. Cl.: B23B 7/02, B23B 7/04, B23B 3/06

(54) **Maschine zur Bearbeitung von stangenförmigen Werkstücken**
Machine tool for machining bars
Machine outil pour l'usinage des barres

(43) Veröffentlichungstag der Anmeldung: 13.10.1999
(73) Patentinhaber: MASCHINENFABRIK BERTHOLD HERMLE AKTIENGESELLSCHAFT, D-78559 Gosheim (DE)
(72) Erfinder: Braun, Hans-Dieter, 78665 Frittlingen (DE); Behringer, Udo, 78532 Tuttlingen (DE)
(74) Vertreter: Vetter, Hans, Dipl.-Phys. Dr.

(56) Entgegenhaltungen:
- EP-A- 0 239 564
- EP-A- 0 538 515

## Beschreibung

Die Erfindung betrifft eine Maschine zur spanenden Bearbeitung von insbesondere stangenförmigen Werkstücken, mit einem in mehreren Achsen mittels einer Schlittenanordnung bewegbaren Bearbeitungskopf zur Aufnahme rotierender Werkzeuge und mit einer Werkstück-Spanneinrichtung, die mit einer Drehantriebsvorrichtung zur Winkelpositionierung des eingespannten Werkstücks versehen ist, wobei eine Drehmeißel-Halterung zwischen einer Warteposition und einer Arbeitsposition mittels der Schlitten anordnung bewegbar ist und wobei die Drehantriebs vorrichtung zur Rotation der Werlestück - Spanneinrichtung auch einen für die Drehbewbeitung geeigneten Drehzahlbereich aufweist (siehe EP-A-538 515).

Bei einer derartigen, aus der DE 196 33 899 bekannten Maschine ist die Schlittenanordnung auf einem Schwenktisch angeordnet, so daß der Bearbeitungskopf um den zu bearbeitenden Endbereich des Werkstücks herumgeschwenkt werden kann. Ein solcher Schwenktisch, der eine Drei-Achsen-Schlittenanordnung trägt, ist jedoch konstruktiv relativ aufwendig und kostenintensiv, und konstruktionsbedingt kann der Endbereich des zu bearbeitenden Werkstücks nur relativ geringfügig aus dem Bearbeitungskopf herausragen, so daß zwar eine Stangenbearbeitung möglich ist, jedoch der Einsatz im wesentlichen auf eine solche Stangenbearbeitung beschränkt ist.

Aus der EP-A-0 538 515 ist eine Barbeitungsmaschine zum Drehen und Fräsen bekannt, die zwei als Revolvermagazine ausgebildete Werkzeug-Halterungen besitzt, von denen eine an einem Schlitten mit einer zusätzlichen Antriebsvorrichtung und die andere an der Schlittenanordnung für den Bearbeitungskopf bzw. am Bearbeitungskopf selbst angeordnet ist. Die erste Werkzeug-Halterung benötigt eine zusätzliche Antriebsvorrichtung, und die zweite Werkzeug-Halterung muß ständig mit dem Bearbeitungskopf mitgeführt bzw. mitbewegt werden, was die gesamte Anordnung konstruktiv sehr aufwendig und kostenintensiv macht.

Eine Aufgabe der vorliegenden Erfindung besteht darin, eine Maschine der eingangs genannten Gattung so zu verbessern, daß nicht nur eine Stangenbearbeitung, sondern auch variablere Einsatzmöglichkeiten bei gleichzeitig kostengünstigerem Aufbau realisiert werden können.

Diese Aufgabe wird erfindungsgemäß durch die Merkmale des Anspruchs 1 gelöst.

Durch die erfindungsgemäße Maschine kann somit nicht nur mittels des Bearbeitungskopfs eine Fräs-, Schleif- und/ oder Bohrbearbeitung des Werkstücks erfolgen, sondern zusätzlich ist auch eine Drehbearbeitung bei rotierendem Werkstück möglich. Dabei besteht der besondere Vorteil darin, daß der Bearbeitungskopf und die Drehmeißel-Halterung durch dieselbe Schlittenanordnung bewegbar sind, was eine deutliche Kostenreduzierung im Hinblick auf herkömmliche Universal-Bearbeitungsmaschinen ermöglicht. Dabei ist die Schlittenanordnung nicht mehr auf einem Schwenktisch angeordnet, was ebenfalls zur Kostenreduzierung beiträgt. Der mittels der Schlittenanordnung bewegbarbe Bearbeitungskopf ermöglicht eine Mehrachsbearbeitung beispielsweise von Stangenenden bei einer Komplettbearbeitung mittels herkömmlicher Werkzeuge bzw. Werkzeugaufnahmen. Bei einem optional vorgesehenen Stangenmagazin ist ein automatischer Fertigungsablauf realisierbar. Da die Schlittenanordnung an einer Seite der Werkstück-Spanneinrichtung angeordnet ist, wird eine gute Zugänglichkeit zum Werkstück und eine gute Einsicht in die Bearbeitungsvorgänge gewährleistet.

Die Werkstückspanneinrichtung dient nicht nur zur Winkelpositionierung des eingespannten Werkstücks im Sinne eines Teilfutters, sondern zusätzlich noch als Spanneinrichtung für die Drehbearbeitung. Da die Bearbeitungsstelle sehr nahe an allen Führungen angeordnet ist, wird eine sehr kompakte Maschine mit hoher Steifigkeit erreicht, die dennoch zur kombinierten Dreh-/Fräs-Komplettbearbeitung geeignet ist.

Die Drehmeißel-Halterung ist in vorteilhafter Weise an einem Schlitten angeordnet, der durch einen in der entsprechenden Richtung, insbesondere der horizontalen Richtung zum Werkstück hin, bewegbaren ersten Schlitten der Schlittenanordnung antreibbar ist. Hierdurch wird für die Bewegung sowohl der Drehmeißel-Halterung als auch des Bearbeitungskopfs in dieser Richtung nur eine einzige Antriebsvorrichtung benötigt, wobei für eine Bearbeitung lediglich durch den Bearbeitungskopf der Schlitten für die Drehmeißel-Halterung durch eine lösbare Kopplungseinrichtung entkoppelt wird.

Durch die in den Unteransprüchen aufgeführten Maßnahmen sind vorteilhafte Weiterbildungen und Verbesserungen der im Anspruch 1 angegebenen Maschine möglich.

Vorzugsweise dient ein senkrecht zur Bewegungsrichtung des ersten Schlittens, insbesondere vertikal bewegbarer zweiter Schlitten der Schlittenanordnung zum Verkoppeln und Entkoppeln des ersten Schlittens mit dem Schlitten der Drehmeißel-Halterung, wobei der Schlitten der Drehmeißel-Halterung der Bewegung des zweiten Schlittens nicht folgt. Die Kopplungsposition ist dabei zweckmäßigerweise die unterste Position des zweiten Schlittens, wobei der an diesem zweiten Schlitten angeordnete Bearbeitungskopf in der Kopplungsposition unterhalb der Drehachse der Werkstück-Spanneinrichtung angeordnet ist, so daß er bei der Drehbearbeitung zwar mitbewegt wird, jedoch nicht stört.

Eine günstige konstruktive Ausgestaltung besteht auch darin, daß ein dritter Schlitten eine Bewegungsrichtung senkrecht zu der der übrigen Schlitten der Schlittenanordnung besitzt und parallel zur Drehachse der Werkstück-Spanneinrichtung verfahrbar ist, wobei der dritte Schlitten vorzugsweise die übrigen Schlitten sowie den Schlitten der Drehmeißel-Halterung trägt. Dieser dritte Schlitten bewegt somit sowohl den Bearbeitungskopf als auch die Drehmeißel-Halterung in seiner Bewegungsrichtung, so daß auch hier eine Antriebseinrichtung für beide Bearbeitungsvorgänge ausreicht.

Die Drehmeißel-Halterung ist zweckmäßigerweise als Drehrevolver-Halterung ausgebildet, so daß verschiedene Drehmeißel eingesetzt werden können, was für einen automatischen Fertigungsablauf von großem Vorteil ist.

Zur Bearbeitung, insbesondere zur Drehbearbeitung längerer Werkzeuge, ist in vorteilhafter Weise neben oder an der Werkstück-Spanneinrichtung ein parallel zu deren Drehachse verfahrbarer und in diese Drehachse einschwenkbarer Reitstock vorgesehen. Durch die Schwenkbarkeit kann er von der Bearbeitungsstelle weggeschwenkt werden, wenn er nicht benötigt wird.

Durch die schwenkbare Anordnung des Bearbeitungskopfs an der vorzugsweise mit motorischen Antriebsvorrichtungen versehenen Schlittenanordnung ist eine vorteilhafte Fünf-Achs-Bearbeitung beispielsweise an Stangenenden mit dem Ziel einer Teile-Komplettbearbeitung möglich. Hierzu besitzt der Bearbeitungskopf insbesondere einen motorischen Schwenkantrieb.

Ein insbesondere als horizontales Drehmagazin ausgebildetes Werkzeugmagazin für rotierende Werkzeuge fördert ebenfalls den automatischen Fertigungsablauf und den schnellen Werkzeugwechsel am Bearbeitungskopf. Hierzu ist die Schlittenanordnung zur Bewegung des Bearbeitungskopfs zwischen der Arbeitsposition und der Werkzeugwechselposition am Werkzeugmagazin ausgebildet, so daß für den Werkzeugwechselvorgang keine zusätzlichen Greifer od.dgl. erforderlich sind.

Das Werkzeugmagazin enthält vorzugsweise auch vom Bearbeitungskopf aufnehmbare Greif- und/oder Handhabungseinrichtungen, wobei der mit einer solchen Greif- und/oder Handhabungseinrichtung versehene Bearbeitungskopf zur Handhabung von Werkstücken ausgebildet ist. Hierdurch können beispielsweise an einem Ende bearbeitete Werkstücke ergriffen, aus der Werkstück-Spanneinrichtung entnommen, gedreht und dann wieder in die Werkstück-Spanneinrichtung zurückgebracht werden, um auch am anderen Ende bearbeitet zu werden. Dies ermöglicht in sehr einfacher Weise einen automatischen Fertigungsablauf ohne zusätzliche Handhabungseinrichtungen.

Zur Bearbeitung von stangenförmigen Werkstücken sind zweckmäßigerweise ein Stangenmagazin und eine Vorschubeinrichtung zum Vorschub des jeweils in der Werkstück-Spanneinrichtung gehaltenen Werkstücks in dessen Längsrichtung vorgesehen.

Ein Ausführungsbeispiel der Erfindung ist in der Zeichnung dargestellt und in der nachfolgenden Beschreibung näher erläutert. Es zeigen:
- Fig. 1: eine kombinierte Maschine als Ausführungsbeispiel der Erfindung in der Draufsicht bei der Bearbeitung durch den Bearbeitungskopf mittels eines rotierenden Werkzeugs,
- Fig. 2: dieselbe Maschine in der Vorderansicht bei der Bearbeitung mittels des schräggeschwenkten Bearbeitungskopfs,
- Fig. 3: diese Maschine in der Vorderansicht, wobei der Bearbeitungskopf mit einem Handhabungsgreifer für ein Werkstück versehen ist, und
- Fig. 4: dieselbe Maschine in der Draufsicht bei der Drehbearbeitung eines Werkstücks durch einen Drehmeißel mit eingeschwenktem Reitstock.

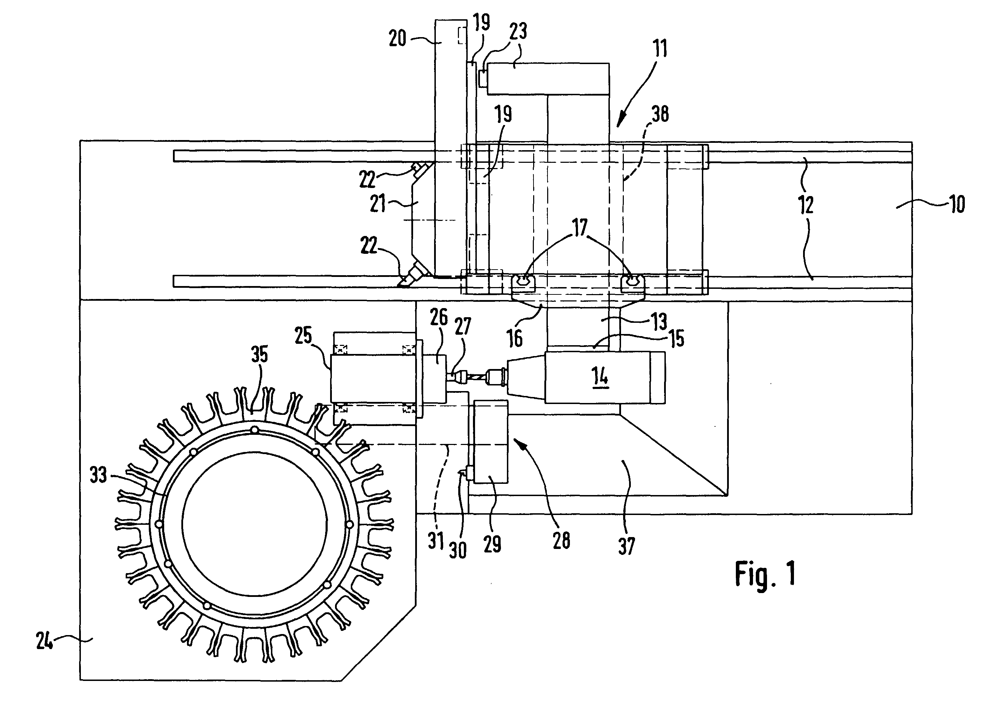

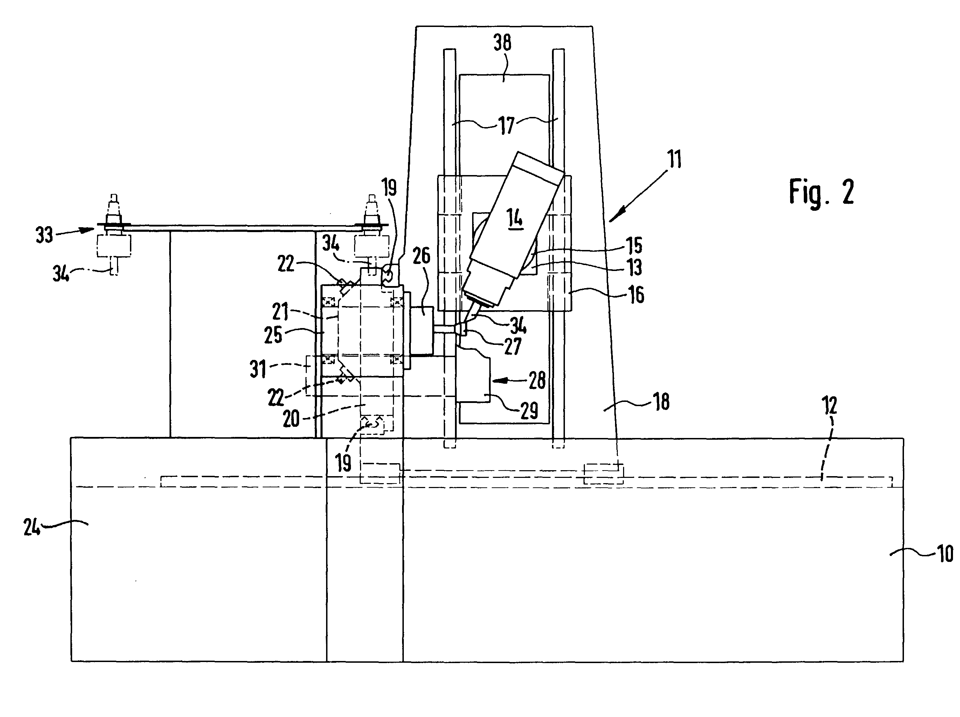

Die in den Fig. 1 bis 4 dargestellte Maschine besteht aus einem Untergestell 10, auf dem eine Schlittenanordnung 11 längsverfahrbar angeordnet ist. Hierzu dienen zwei Führungsschienen 12. Die Schlittenanordnung besteht dabei aus drei motorisch angetriebenen und positionierbaren Schlitten 13, 16, 18 , die in den drei zueinander senkrechten Raumrichtungen X, Y und Z bewegbar sind.

An einem ersten horizontal verfahrbaren Schlitten 13 ist ein Bearbeitungskopf 14 (Spindelaufnahme) mittels einer Schwenkeinrichtung 15 um eine horizontale Achse, die in der Bewegungsrichtung des ersten Schlittens 13 verläuft, schwenkbar gelagert. Zum Verschwenken des Bearbeitungskopfs 14 dient ein nicht dargestellter motorischer Drehantrieb. Dieser erste Schlitten 13 ist horizontal verfahrbar in einem zweiten Schlitten 16 geführt, der an zwei vertikalen Führungsschienen 17 vertikal verfahrbar ist. Diese beiden vertikalen Führungsschienen 17 sind an einem dritten Schlitten 18 angeordnet, der turmartig gestaltet ist und an den beiden Führungsschienen 12 auf dem Untergestell 10 horizontal verfahrbar ist. Die Bewegungsrichtung des dritten Schlittens 18 verläuft dabei senkrecht zur Bewegungsrichtung des ersten Schlittens 13. Der dritte Schlitten 18 weist eine Durchgangsöffnung 38 in der Bewegungsrichtung des ersten Schlittens 13 auf, um insbesondere auch die Vertikalbewegung dieses ersten Schlittens 13 mittels des zweiten Schlittens 16 zu ermöglichen.

Seitlich am dritten Schlitten 18 ist ein mittels zwei horizontalen Führungsschienen 19 horizontal verschiebbarer weiterer Schlitten 20 angeordnet, der seitlich eine um eine horizontale Achse drehbare Drehrevolver-Halterung 21 zur Aufnahme von mehreren Drehmeißeln 22 aufweist. Die Bewegungsrichtung dieses weiteren Schlittens 20 entspricht der des ersten Schlittens 13, jedoch besitzt dieser weitere Schlitten 20 keinen eigenen motorischen Antrieb. Zum Antrieb des weiteren Schlittens 20 besitzt der erste Schlitten 13 an seinem vom Bearbeitungskopf 14 entgegengesetzten Endbereich hinter dem turmartigen dritten Schlitten 18 eine Kopplungseinrichtung 23, die zum Ankoppeln und Entkoppeln des ersten Schlittens 13 mit dem weiteren Schlitten 20 ausgebildet ist. Zum Ankoppeln wird der zweite Schlitten 16 so lange vertikal nach unten bewegt, bis diese Kopplungseinrichtung 23 am ersten Schlitten 13 in den weiteren Schlitten 20 einkoppelt. Wird nun der erste Schlitten 13 in dieser untersten Position zur Bearbeitungsseite hin bewegt, so bewegt er infolge der Ankopplung den weiteren Schlitten 20 mit der Drehrevolver-Halterung 21 mit. Der Bearbeitungskopf 14 wird dabei zwar ebenfalls mitbewegt, er weist jedoch im angekoppelten Zustand eine so tiefe Position auf, daß er bei der Drehbearbeitung eines Werkstücks durch einen Drehmeißel 22 der Drehrevolver-Halterung 21 nicht stört. Zur Entkopplung wird der erste Schlitten 13 wiederum in die entgegengesetzte Richtung bewegt, bis der weitere Schlitten 20 wiederum die in Fig. 1 dargestellte Ruheposition erreicht. Dann erfolgt eine Entkopplung beispielsweise dadurch, daß sich der zweite Schlitten 16 mit dem ersten Schlitten 13 vertikal nach oben bewegt, so daß nunmehr eine Fräs-, Bohr- oder Schleifbearbeitung eines Werkstücks durch den Bearbeitungskopf 14 erfolgen kann.

Das Untergestell 10 besitzt bearbeitungsseitig einen seitlichen tischartigen Fortsatz 24, auf dem eine Werkstück-Spanneinrichtung 25 angeordnet ist. Diese besitzt ein drehbar gelagertes Spannfutter 26 für Werkstücke, das durch einen nicht dargestellten motorischen Antrieb um eine horizontale Längsachse rotiert werden kann. Diese Rotation erfolgt bei einer Bearbeitung durch den Bearbeitungskopf 14 zur Winkelpositionierung nach Art eines Teilantriebs und zur Drehbearbeitung mittels eines Drehmeißels 22 mit höheren, für die Drehbearbeitung geeigneten Drehzahlen.

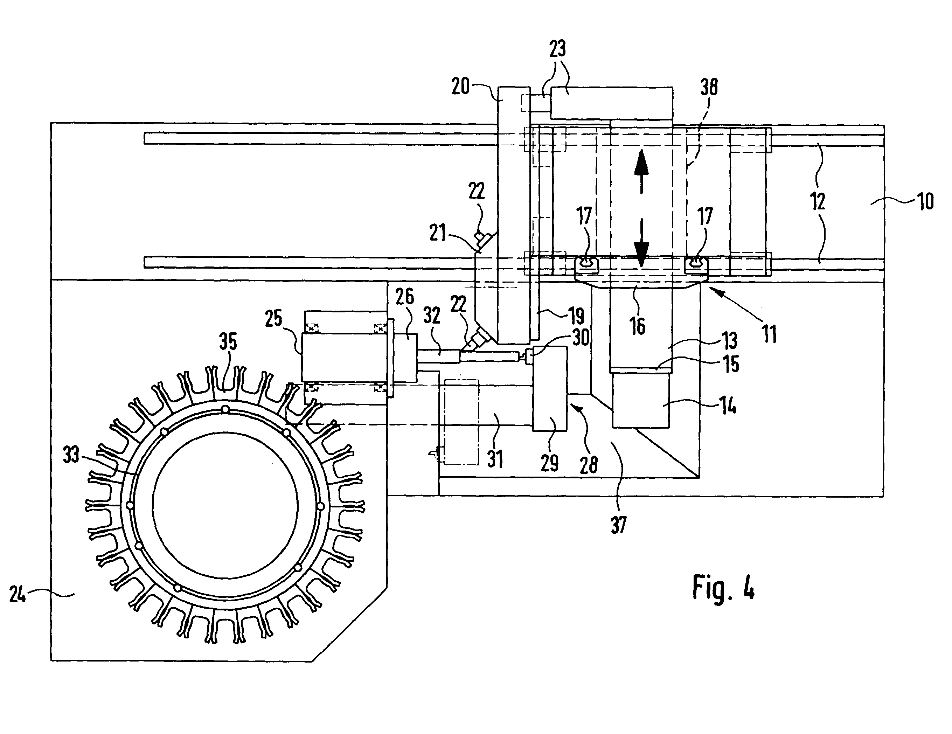

Zur präzisen Halterung von längeren Werkstücken bei der Drehbearbeitung dient ein Reitstock 28, der eine an einer Schwenkhalterung 29 angeordnete Zentrierspitze 30 aufweist. Diese Schwenkhalterung 29 ist an einem horizontal und parallel zur Drehachse des Spannfutters 26 verschiebbaren Haltearm 31 schwenkbar gelagert. In Fig. 4 ist der Haltearm 31, der ebenfalls einen motorischen Positionierantrieb besitzt, ausgefahren, und die Zentrierspitze 30 ist mittels der Schwenkhalterung 29 in die Drehachse des Spannfutters 26 eingeschwenkt und hält dort das freie Ende eines stangenartigen Werkstücks 32, das mittels eines Drehmeißels 22 bearbeitet wird. Wird der Reitstock 28 nicht benötigt, so wird die Schwenkhalterung 29 in die strichpunktiert dargestellte Ruhestellung bzw. in die in Fig. 1 dargestellte Ruhestellung zurückbewegt. Selbstverständlich können längere Werkstücke auch dann mittels des Reitstocks 28 zusätzlich gehalten werden, wenn eine Bearbeitung durch den Bearbeitungskopf 14 erfolgt.

Auf dem tischartigen Fortsatz 24 ist weiterhin ein horizontales, motorisch drehbares Werkzeugmagazin 33 angeordnet, das zur Aufnahme einer Vielzahl von Werkzeugen bzw. von in Werkzeughalterungen gehaltenen Werkzeugen 34 dient. Zum Wechseln eines Werkzeugs wird der vertikal positionierte Bearbeitungskopf 14 mittels des dritten Schlittens 18 zum Werkzeugmagazin 33 hin bewegt, wobei durch Vertikalbewegung durch den zweiten Schlitten 16 das nicht mehr benötigte Werkzeug in die dem Untergestell 10 zugewandte Werkzeughalterung 35 des Werkzeugmagazins 33 eingesetzt wird. Danach wird das Werkzeugmagazin 33 gedreht, bis das jetzt gewünschte Werkzeug in der entsprechenden übergabeposition positioniert ist. Die Aufnahme erfolgt dann wiederum mit Hilfe einer Vertikalbewegung des zweiten Schlittens 16.

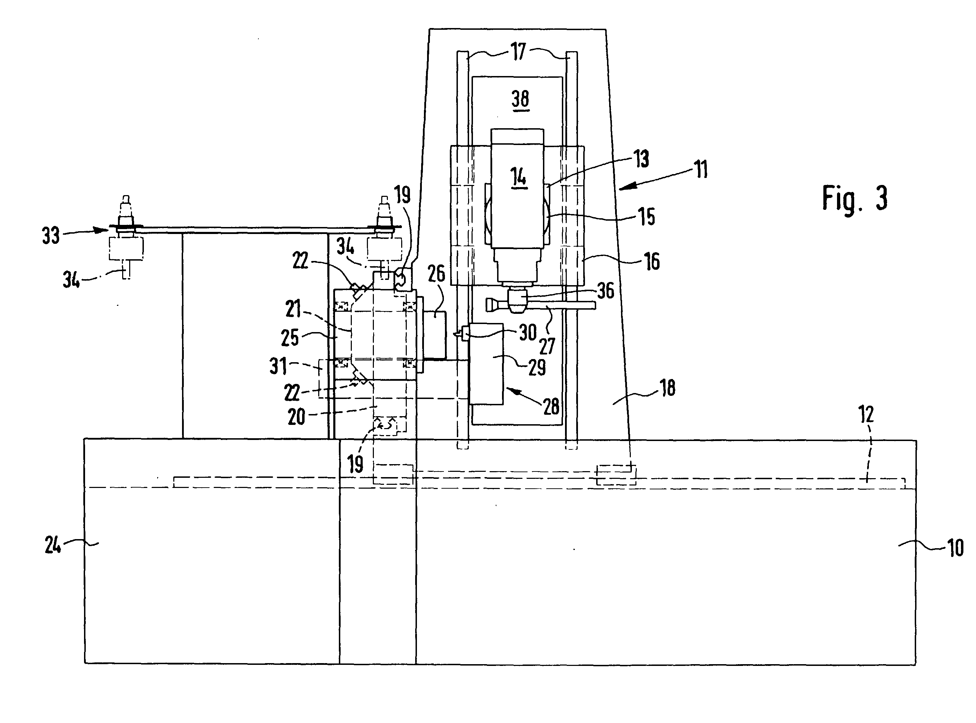

Das Werkzeugmagazin 33 kann neben Werkzeugen auch noch Greif- und/oder Handhabungseinrichtungen 36 für den Bearbeitungskopf 14 aufweisen. In Fig. 3 ist der Bearbeitungskopft 14 mit einer solchen Greif- und/oder Handhabungseinrichtung 36 versehen, die zum Ergreifen und Handhaben eines Werkstücks 27 dienen. Beispielsweise kann das Werkstück 27 nach der Bearbeitung (Drehbearbeitung oder Bearbeitung durch den Bearbeitungskopf 14) mittels dieser Greif- und/oder Handhabungseinrichtung 36 ergriffen, aus dem Spannfutter 26 entnommen, um 180° geschwenkt und wieder in das Spannfutter 26 eingesetzt werden. Nun kann der zweite Endbereich dieses Werkstücks 27 in der gewünschten Weise bearbeitet werden.

Zur Stangenbearbeitung, wie sie beispielsweise im eingangs angegebenen Stand der Technik beschrieben ist, kann ein Stangenmagazin vorgesehen sein, wie es dort beschrieben ist. Aus diesem Stangenmagazin werden nacheinander Stangen entnommen und in die Werkzeug-Spanneinrichtung 25 eingesetzt. Nach der Bearbeitung des freien Endbereichs einer solchen Stange, vor allem durch den Bearbeitungskopf 14, wird das so gebildete fertige Teil abgetrennt, die Stange entsprechend nachgeschoben und durch gleiche Bearbeitung des freien Endbereichs das nächste Teil bearbeitet. Zum Abtrennen kann eine nicht dargestellte Abtrenneinrichtung vorgesehen sein, oder aber der Bearbeitungskopf 14 holt sich ein Trennwerkzeug aus dem Werkzeugmagazin 33 und trennt den jeweils fertigbearbeiteten Endbereich der Stange ab. Alternativ hierzu kann ein Abtrennen auch durch einen Abstechmeißel an der Drehrevolver-Halterung 21 erfolgen. Auch der schrittweise Vorschub der Stange kann durch eine nicht dargestellte Vorschubeinrichtung oder mittels des Bearbeitungskopfs 14 erfolgen.

Unterhalb des Bearbeitungsbereichs, also des Bereichs unterhalb des Spannfutters 26, ist ein wannenartiger Aufnahmebereich 37 für Späne, Schmiermittel und eventuell auch fertigbearbeitete Werkstücke vorgesehen, die von dort aus der Entsorgung, Wiederaufbereitung, Weiterverwendung oder Weiterbehandlung zugeführt werden können.

In Abweichung vom dargestellten Ausführungsbeispiel ist es selbstverständlich auch möglich, die drei Schlitten der Schlittenanordnung 11 in anderer Reihenfolge und mit vertauschten Bewegungsrichtungen anzuordnen.

## Patentansprüche

1. Maschine zur spanenden Bearbeitung von insbesondere stangenförmigen Werkstücken, mit einem in mehreren Achsen mittels einer Schlittenanordnung (11) bewegbaren Bearbeitungskopf (14) zur Aufnahme rotierender Werkzeuge (34), mit einer Werkstück-Spanneinrichtung (25), die mit einer Drehantriebsvorrichtung zur Winkelpositionierung des eingespannten Werkstücks (27) versehen ist und mit einer zwischen einer Warteposition und einer Arbeitsposition mittels der Schlittenanordnung (11) bewegbaren Drehmeißel-Halterung (21), wobei die Drehantriebsvorrichtung zur Rotation der Werkstück-Spanneinrichtung (25) auch einen für die Drehbearbeitung geeigneten Drehzahlbereich aufweist, wobei die Drehmeißel-Halterung (21) an einem Schlitten (20) angeordnet ist, der durch einen in der entsprechenden Richtung, insbesondere der horizontalen Richtung zum Werkstück hin, bewegbaren ersten Schlitten (13) der Schlittenanordnung (11) antreibbar ist, und wobei der Schlitten (20) durch eine Kopplungseinrichtung (23) wahlweise mit der Schlittenanordnung (11) verbindbar ist.

2. Maschine nach Anspruch 1, **dadurch gekennzeichnet, daß** ein senkrecht zur Bewegungsrichtung des ersten Schlittens (13), insbesondere vertikal bewegbarer zweiter Schlitten (16) der Schlittenanordnung (11) den ersten Schlitten (13) mit dem Schlitten (20) der Drehmeißel-Halterung (21) verkoppelt und entkoppelt, wobei der Schlitten (20) der Drehmeißel-Halterung (21) der Bewegung des zweiten Schlittens (16) nicht folgt.

3. Maschine nach Anspruch 2, **dadurch gekennzeichnet, daß** die Kopplungsposition eine unterste Position, insbesondere die unterste Position des zweiten Schlittens (16), ist, wobei der mit diesem zweiten Schlitten mitbewegte Bearbeitungskopf in der Kopplungsposition unterhalb der Drehachse der Werkstück-Spanneinrichtung (25) angeordnet ist.

4. Maschine nach einem der vorhergehenden Ansprüche, **dadurch gekennzeichnet, daß** ein dritter Schlitten (18) eine Bewegungsrichtung senkrecht zu der der übrigen Schlitten (13, 16) der Schlittenanordnung (11) besitzt und parallel zur Drehachse der Werkstück-Spanneinrichtung (25) verfahrbar ist, wobei der dritte Schlitten (18) vorzugsweise die übrigen Schlitten (13, 16) sowie den Schlitten (20) der Drehmeißel-Halterung (21) trägt.

5. Maschine nach einem der vorhergehenden Ansprüche, **dadurch gekennzeichnet, daß** die Drehmeißel-Halterung (21) als Drehrevolver-Halterung ausgebildet ist.

6. Maschine nach einem der vorhergehenden Ansprüche, **dadurch gekennzeichnet, daß** neben oder an der Werkstück-Spanneinrichtung (25) ein parallel zu deren Drehachse verfahrbarer und in diese Drehachse einschwenkbarer Reitstock (28) vorgesehen ist.

7. Maschine nach einem der vorhergehenden Ansprüche, **dadurch gekennzeichnet, daß** der Bearbeitungskopf (14) schwenkbar an der vorzugsweise mit motorischen Antriebsvorrichtungen versehenen Schlittenanordnung (11) gelagert ist und insbesondere einen motorischen Schwenkantrieb besitzt.

8. Maschine nach einem der vorhergehenden Ansprüche, **dadurch gekennzeichnet, daß** ein insbesondere als horizontales Drehmagazin ausgebildetes Werkzeugmagazin (33) für rotierende Werkzeuge (34) vorgesehen ist und daß die Schlittenanordnung (11) zur Bewegung des Bearbeitungskopfs (14) zwischen der Arbeitsposition und der Werkzeugwechselposition am Werkzeugmagazin (33) ausgebildet ist.

9. Maschine nach Anspruch 8, **dadurch gekennzeichnet, daß** das Werkzeugmagazin (33) auch vom Bearbeitungskopf (14) aufnehmbare Greif- und/oder Handhabungseinrichtungen (36) enthält, wobei der mit einer solchen Greif- und/oder Handhabungseinrichtung (36) versehene Bearbeitungskopf (14) zur Handhabung von Werkstücken (27) ausgebildet ist.

10. Maschine nach einem der vorhergehenden Ansprüche, **dadurch gekennzeichnet, daß** zur Bearbeitung von stangenförmigen Werkstücken ein Stangenmagazin und eine Vorschubeinrichtung zum Vorschub des jeweils in der Werkstück-Spanneinrichtung (25) gehaltenen Werkstücks in dessen Längsrichtung vorgesehen ist.

## Claims

1. Machine for the machining of workpieces, in particular bar-shaped, with a machining head (14) for the holding of rotating tools (34) which is movable in several axes by means of a slide assembly (11), with a workpiece clamping fixture (25) provided with a rotary drive mechanism for angled positioning of the clamped workpiece (27), and with a turning-tool holder (21) movable between a waiting position and a working position by means of the slide assembly (11), whercin the rotary drive mechanism for rotation of the workpiece clamping fixture (25) also has a speed range suitable for rotary machining, wherein the turning-tool holder (21) is mounted on a slide (20) which can be driven by a first slide (13) of the slide assembly (11) which can be moved in the relevant direction, in particular the horizontal direction towards the workpiece, and wherein the slide (20) may optionally be connected to the slide assembly (11) via a coupling unit (23).

2. Machine according to claim 1, **characterized in that** a second slide (16) of the slide assembly (11), movable at right-angles to the direction of movement of the first slide (13) and in particular vertically, couples and decouples the first slide (13) to and from the slide (20) of the turning-tool holder (21), while the slide (20) of the turning-tool holder (21) does not follow the movement of the second slide (16).

3. Machine according to claim 2, **characterized in that** the coupling position is the lowest position, in particular the lowest position of the second slide (16), wherein the machining head moved with this second slide is located below the axis of rotation of the workpiece clamping fixture (25) in the coupling position.

4. Machine according to any of the preceding claims, **characterized in that** a third slide (18) has a direction of movement at right-angles to that of the other slides (13, 16) of the slide assembly (11) and is traversable parallel to the axis of rotation of the workpiece clamping fixture (25), while the third slide (18) preferably carries the other slides (13, 16) and the slide (20) of the turning-tool holder (21).

5. Machine according to any of the preceding claims, **characterized in that** the turning-tool holder (21) is in the form of a four-way turret holder.

6. Machine according to any of the preceding claims, **characterized in that** there is provided adjacent to or on the workpiece clamping fixture (25) a tailstock (28) which is traversable parallel to the axis of rotation of the former and is able to swivel in to this axis of rotation.

7. Machine according to any of the preceding claims, **characterized in that** the machining head (14) is pivotably mounted on the slide assembly (11) which is preferably provided with powered drive mechanisms, and in particular has a powered pivot drive.

8. Machine according to any of the preceding claims, **characterized in that** a tool magazine (33) for rotating tools (34) is provided, in particular in the form of a horizontal rotary magazine, and that the slide assembly (11) is designed to move the machining head (14) between the working position and the tool-change position on the tool magazine (33).

9. Machine according to claim 8, **characterized in that** the tool magazine (33) also contains gripping and/or handling devices (36) which can be held by the machining head (14), wherein the machining head (14) provided with any such gripping and/or handling device (36) is designed for the handling of workpieces (27).

10. Machine according to any of the preceding claims, **characterized in that** for the machining of bar-shaped workpieces there is provided a bar magazine and a feed mechanism to feed the respective workpiece held in the workpiece clamping fixture (25) in its longitudinal direction.

## Revendications

1. Machine pour l'usinage par enlèvement de copeaux de pièces en particulier en forme de barres, comportant une tête d'usinage (14), déplaçable dans plusieurs axes, au moyen d'un dispositif à chariot (11), destinée à recevoir des outils rotatifs (34), comportant un dispositif de serrage de pièce (25), qui est pourvu d'un dispositif d'entraînement en rotation pour le positionnement angulaire de la pièce (27) serrée, et comportant un support d'outil de tournage (21), déplaçable entre une position d'attente et une position de travail, au moyen du dispositif à chariots (11), le dispositif d'entraînement en rotation, pour la rotation du dispositif de serrage de pièce (25), comportant aussi une gamme de vitesses de rotation convenant au tournage, le support d'outil de tournage (21) étant disposé sur un chariot (20), qui peut être entraîné par un premier chariot (13) du dispositif à chariots (11), déplaçable dans la direction correspondante, en particulier la direction horizontale vers la pièce, et le chariot (20) pouvant être relié sélectivement au dispositif à chariots (11), par un dispositif d'accouplement (23).

2. Machine selon la revendication 1, **caractérisée en ce qu'**un deuxième chariot (16) du dispositif à chariots (11), déplaçable perpendiculairement à la direction de déplacement du premier chariot (13), en particulier verticalement, accouple le premier chariot (13) au chariot (20) du support d'outil de tournage (21) et le désaccouple de celui-ci, le chariot (20) du support d'outil de tournage (21) ne suivant pas le mouvement du deuxième chariot (16).

3. Machine selon la revendication 2, **caractérisée en ce que** la position d'accouplement est une position basse, en particulier la position la plus basse du deuxième chariot (16), la tête d'usinage, déplacée avec ce deuxième chariot, étant disposée dans la position d'accouplement au-dessous de l'axe de rotation du dispositif de serrage de pièce (25).

4. Machine selon l'une des revendications précédentes, **caractérisée en ce qu'**un troisième chariot (18) présente une direction de déplacement perpendiculaire à celle des autres chariots (13, 16) du dispositif à chariots (11), et est déplaçable parallèlement à l'axe de rotation du dispositif de serrage de pièce (25), le troisième chariot (18) supportant de préférence les autres chariots (13, 16), ainsi que le chariot (20) du support d'outil de tournage (21).

5. Machine selon l'une des revendications précédentes, **caractérisée en ce que** le support d'outil de tournage (21) est conformé en support pour tour revolver.

6. Machine selon l'une des revendications précédentes, **caractérisée en ce qu'**à côté du dispositif de serrage de pièce (25) ou sur celui-ci est prévue une contre-pointe (28) déplaçable parallèlement à son axe de rotation et pouvant pivoter vers l'intérieur dans cet axe de rotation.

7. Machine selon l'une des revendications précédentes, **caractérisée en ce que** la tête d'usinage (14) est montée pivotante sur le dispositif à chariots (11), pourvu de préférence de dispositifs d'entraînement motorisés, et possède en particulier un dispositif motorisé d'entraînement en pivotement.

8. Machine selon l'une des revendications précédentes, **caractérisée en ce qu'**un magasin d'outils (33), réalisé en particulier en tant que magasin tournant horizontal, est prévu pour des outils rotatifs (34), et **en ce que** le dispositif à chariots (11) est conçu pour le déplacement de la tête d'usinage (14) entre la position de travail et la position de changement d'outil sur le magasin d'outils (33).

9. Machine selon la revendication 8, **caractérisée en ce que** le magasin d'outils (33) contient aussi des dispositifs de préhension et/ou de manipulation (36), qui peuvent être reçus par la tête d'usinage (14), la tête d'usinage (14), pourvue d'un tel dispositif de préhension et/ou de manipulation (36), étant conçue pour la manipulation de pièces à usiner (27).

10. Machine selon l'une des revendications précédentes, **caractérisée en ce que** pour l'usinage de pièces en forme de barres, il est prévu un magasin à barres et un dispositif d'avance pour l'avance de la pièce, maintenue dans le dispositif de serrage de pièce (25), dans la direction longitudinale de ce dispositif.
